# EUROPÄISCHE PATENTSCHRIFT

(11) **EP 2 082 401 B1**
(45) Veröffentlichungstag und Bekanntmachung des Hinweises auf die Patenterteilung: **04.05.2011**
(21) Anmeldenummer: 07802938.6
(22) Anmeldetag: 28.08.2007
(51) Int. Cl.: G21C 3/04

(54) **KUGELFÖRMIGES BRENNELEMENT UND DESSEN HERSTELLUNG FÜR GASGEKÜHLTE HOCHTEMPERATUR-KUGELHAUFEN-KERNREAKTOREN (HTR)**
SPHERICAL FUEL ELEMENT AND PRODUCTION THEREOF FOR GAS-COOLED HIGH TEMPERATURE PEBBLE BED NUCLEAR REACTORS (HTR)
ÉLÉMENT COMBUSTIBLE DE FORME SPHÉRIQUE ET SON PROCÉDÉ DE FABRICATION POUR RÉACTEURS À HAUTE TEMPÉRATURE À LIT DE BOULETS (HTR) REFROIDIS AU GAZ

(30) Priorität: 29.08.2006 DE 102006040309
(43) Veröffentlichungstag der Anmeldung: 29.07.2009
(73) Patentinhaber: ALD Vacuum Technologies GmbH, 63450 Hanau (DE)
(72) Erfinder: HROVAT, Milan, 63517 Rodenbach (DE); GROSSE, Karl-Heinz, 63584 Gründau (DE); SCHULTEN, Rainer, 48167 Münster (DE)
(74) Vertreter: Hrovat, Andrea Darinka
(86) Internationale Anmeldenummer: PCT/EP2007/058907
(87) Internationale Veröffentlichungsnummer: WO 2008/025757

(56) Entgegenhaltungen:
- GB-A- 1 478 037
- US-A- 3 095 316
- US-A- 4 271 101

## Beschreibung

Das Brennelement der HT-Kugelhaufenreaktoren ist eine durch Pressen aus A 3 Sondergraphit hergestellte Graphitkugel von 60 mm Durchmesser und besteht aus einem brennstoffhaltigen Kern von 50 mm Durchmesser, der von einer 5 mm dicken brennstofffreien Schale umgeben ist. Der Kern der Brennelementkugel (BE-Kugel) ist mit der Schale übergangslos verbunden und bildet mit dieser eine Einheit. Der Brennstoff ist in Form von beschichteten Teilchen (coated particles) im Kugelkern homogen verteilt.

Die beschichteten Teilchen sind etwa 0,5 mm große Kügelchen (Brennstoffkerne), vorzugsweise aus Uranoxid und sind zur Rückhaltung der während des Reaktorbetriebs entstehenden Spaltprodukte mit Pyrokohlenstoff und Siliziumcarbid mehrfach beschichtet.

Die sphärischen Brennstoffkerne werden vorzugsweise nach dem Gelfällungsverfahren hergestellt. Dabei wird eine Lösung von Uranilnitrat mit Zusätzen aus Polyvinylalkohol und Tetrahydrofurfurylalkohol durch Vibration der Düsen vertropft und mit NH₃ sowie NH₄OH zu sphärischem Ammoniumdiuranat (ADU) Brennstoffkernen verfestigt. Nach Waschen, Trocknen, Reduzieren und Sintern werden UO₂-Brennstoffkerne hoher Dichte mit gewünschtem Durchmesser erhalten.

Die Beschichtung der Brennstoffkerne mit Pyrokohlenstoff und Siliziumcarbid erfolgt im Allgemeinen in Wirbelbettanlagen. Diese Anlagen bestehen aus einem senkrecht stehenden Graphitrohr mit konischem Boden, das von außen mit einer Graphitwiderstandheizung beheizt wird. In die Spitze des Konus münden mehrere Düsen, durch die das zum Wirbeln benötigte Trägergas Argon oder Wasserstoff und Beschichtungsgase eingeleitet werden. Die Pyrokohlenstoffschichten werden durch thermische Zersetzung von Ethin oder einer Mischung von Ethin und Propin aus der Gasphase bei Temperaturen zwischen 1000°C und 1400°C abgeschieden. Bei Beschichtung mit Siliziumcarbid dient als Beschichtungsgas vorzugsweise Methyltrichlorsilan. Die Abscheidetemperatur liegt etwas höher und beträgt 1500°C. Abhängig von den Beschichtungsbedingungen werden Schichten unterschiedlicher Dichte und Struktur mit unterschiedlichen physikalischen und mechanischen Eigenschaften erhalten.

Das Verfahren ist unter anderem in den Veröffentlichungen SM-111115, Symposium "Advanced High-Temperature Gas-Coold Reactors" in Jülich am 21. bis 25. Oktober 1968 und in "Recent Development in the Manufacture of Spherical Fuel Elements for High Temperature Reactors" (Hackstein, K.G., Hrovat, M., Spener, G., Ehlers, K.) und KFA Report, Jülich, 687-RW (August 1970), "Entwicklung von beschichteten Brennstoffteilchen" (H. Nickel) sowie in der deutschen Patentschrift DE 102 04 166 und der deutschen Offenlegungsschrift DE 101 44 352 A1 beschrieben.

An die HTR-BE-Kugeln wird eine Reihe von Forderungen gestellt:
- hohe geometrische Dichte der Graphitmatrix
- gute mechanische Festigkeitseigenschaften
- niedriges Elastizitätsmodul
- geringe thermische Ausdehnung
- gute Wärmeleitfähigkeit und
- hohe Stabilität bei der Bestrahlung mit schnellen Neutronen.

Um die angestrebten Eigenschaften zu erreichen, müssen üblicherweise die Kohlenstoffformkörper einen Graphitierungsprozess bei Temperaturen von 2700°C bis 3000°C durchlaufen.

Da die gepressten BE-Kugeln nach dem Pressen im Kugelkern beschichtete Brennstoffteilchen enthalten, kann ein Graphitierungsprozess bei Temperaturen oberhalb 2700°C nicht durchgeführt werden. Die entscheidenden Gründe hierfür sind:

Bereits bei Temperaturen oberhalb 2100°C diffundiert das Uran aus den Brennstoffkernen in die Hüllschichten der Partikel und von da aus in die Graphitmatrix der BE-Kugel. Das außerhalb der Beschichtung in die poröse Graphitmatrix der BE-Kugel diffundierte Uran hätte während des Reaktorbetriebes zu einer unzulässig hohen Kontamination des Kühlgases mit den freigesetzten Spaltprodukten geführt. Die Diffusion in Uran in Graphit ist im Journal of Nuclear Materials, 19 (1966), Seiten 53-58 von Hrovat, M. und Spener, G. beschrieben.

Außerdem verändern die Pyrokohlenstoffschichten bei Temperaturen oberhalb 2100°C ihre Struktur. Dabei steigt die Anisotropie der kristallographischen Orientierung des pyrolitischen Kohlenstoffs stark an. Folglich besteht die Gefahr, dass die beschichteten Teilchen im Reaktor sehr früh ihre mechanische Integrität verlieren und somit die radioaktiven Spaltprodukte spontan freisetzen. Die Ergebnisse sind im KFA-Report "Jül-868-RW" (Juni 1972), "Über die Änderung der Anisotropie der kristallographischen Orientierung in Pyrokohlenstoffhüllschichten durch Glühung und Neutronenbestrahlung" von Koizlik, K., beschrieben.

Der einschlägigen Literatur ist zu entnehmen, dass der Graphit bei der Bestrahlung mit schnellen Neutronen und Temperaturen oberhalb 1000°C seine Dimensionsstabilität und mechanische Integrität nur dann aufrecht erhält, wenn er hohe Kristallinität aufweist und isotrop ist. Das Bestrahlungsverhalten und die entsprechenden Ergebnisse sind unter anderem beschrieben in: GA-Report (März 1970), "Irradiation Behaviour of Nuclear Graphites at Elevated Temperatures", von Engle, G.B. und PNWL-1056 Report (1969), Pacific Northwest-Laboratory Richland/Washington, von Helm, J.W..

Um die Dimensionsstabilität und mechanische Integrität der gepressten BE-Kugel während der gesamten Verweilzeit im Reaktor trotz einer auf etwa nur 2000°C begrenzten Wärmebehandlung zu gewährleisten, wurde ein Sondergraphit entwickelt. Der Sondergraphit wird in der Fachliteratur als A 3-Graphitmatrix beschrieben. Die A 3-Graphitmatrix ist auf Naturgraphitbasis aufgebaut. Der Naturgraphit zeichnet sich durch extrem hohe Kristallinität aus. Sein Primärkorn ist jedoch plättchenförmig mit hexagonaler kristalliner Ordnung (Syngonie) und folglich stark anisotrop.

Zum Erzielen der erforderlichen Isotropie der physikalischen Eigenschaften der Matrix werden die BE-Kugeln in einer Gummiform, vorzugsweise aus Silikonkautschuk, gepresst. Die zylindrische Gummiform setzt sich aus mehreren Teilen zusammen und weist zur Aufnahme des Presspulver-Brennstoffgemisches in ihrem Zentrum einen ellipsoidförmigen Hohlraum auf, der so bemessen ist, dass bereits bei einem Pressdruck von oberhalb 5 MPa eine Kugel entsteht. Die Gummiform wird in ein Stahlgesenk der Presse eingesetzt und mit Ober- und Unterstempel zusammengepresst.

Zur Herstellung der BE-Kugeln wird zunächst ein Gemisch von Graphitpresspulver und beschichteten Teilchen zu einem handhabbaren Kugelkern vorgepresst, dann wird der vorgepresste Kugelkern in einer zweiten Gummiform in Graphitpresspulver eingebettet und bei angehobenem Druck zu einer permeablen, luftdurchlässigen Kugel nachgepresst und abschließend die nachgepresste Kugel in einer dritten Gummiform im Vakuum auf die Enddichte fertig gepresst.

Zum Verkoken des Binders werden die BE-Kugeln in Inertgasatmosphäre innerhalb von 18 Stunden auf 800°C erhitzt und abschließend im Vakuum bei ca. 2000°C geglüht. Die A 3-Graphitmatrix setzt sich aus 72,7 Gew.-% Naturgraphit, 18,2 Gew.-% in Pulverform bei 3000°C graphitiertem Petrolkoks und 9,1 Gew.-% Binderkoks zusammen.

Das Verfahren ist in den deutschen Patent- und Offenlegungsschriften DE 198 37 989 C2 und DE 102 53 205 A1 beschrieben.

Um die BE-Kugeln nicht nur isotrop, sondern auch nahezu ohne Eigenschaftsgradienten herstellen zu können, werden sie in der dritten Verdichtungsstufe bei einem hohen Pressdruck von 300 MPa auf 1,92 g/cm³, entsprechend etwa 99% der theoretischen Dichte, fertig gepresst. Beim Druckentlasten verringert sich die Dichte zunächst auf einen Wert von 1,8 g/cm³, nimmt bei der anschließenden Wärmebehandlung weiter ab und erreicht bei 280°C den Minimalwert von 1,6 g/cm³. Bei dieser Temperatur beginnt das Binderharz sich unter Entwicklung von Crack-Gasen zu zersetzen.

Die Einstellung der erforderlichen Porosität erfolgt durch den beigemischten Elektrographitpulveranteil. Damit ist ein nahezu druckloses Entgasen der Matrix unter Vermeiden von Rissen sichergestellt. Mit dem Fortschreiten der Harzzersetzung beginnt die Graphit-Matrix zu schrumpfen und erreicht bei etwa 850°C mit 1,72 g/cm³ eine relativ hohe Enddichte. Die Gewichtsabnahme der Kugelmatrix durch die Harzverkokung beträgt etwa 9 Gew.-%.

Die Optimierung der A 3-Graphitmatrix ist im KFA-Bericht, Jül.-969-RW, Juni 1973, "Über die Entwicklung eines Matrixmaterials zur Herstellung gepresster Brennelemente für Hochtemperaturreaktoren" von Hrovat, M., Nickel, H. und Koizlik, K. beschrieben.

In den siebziger und achtziger Jahren wurden über eine Million von gepressten A 3-Brennelementkugeln in dem Kugelhaufenreaktor AVR in Jülich und den Thorium-Hochtemperaturreaktor in Schmehausen/Uentrop eingesetzt. Die BE-Kugeln haben sich im Dauerbetrieb gut bewährt und zeigten ein einwandfreies Verhaften.

Bei den Kernreaktoren der Folge-Generationen werden an die HTR-Brennelemente zusätzlich weitere Anforderungen gestellt. Die BE-Kugeln müssen bei voller Reaktorleistung auch dann intakt bleiben und dürfen keine unzulässigen Spaltprodukte freisetzen, wenn ein hypothetischer Unfall auftreten sollte, wie z.B. ein vollständiger Ausfall der Kühlung und/oder ein unkontrollierter Einbruch von Luft, Wasser oder Wasserdampf in den Reaktorkern. Um das zu gewährleisten, wird von den A 3-BE-Kugeln eine erhöhte Korrosionsbeständigkeit gegenüber dem Sauerstoff bzw. Wasserdampf gefordert.

Zur Beurteilung der Korrosionsbeständigkeit wird ein Standardtest durchgeführt. Bei diesem Test werden die BE-Kugeln in einer Wasserdampf enthaltenden Inertgasatmosphäre auf 1000°C erhitzt und dabei der Gewichtsverlust bestimmt. Als Reaktionsgas dient ein 1 Vol.-%-iges Wasserdampf-Argon-Gemisch. Dieses Gemisch wird in einem mit Wasser gefüllten Befeuchtungsbehälter hergestellt. Dabei perlt das Argon durch das Wasser hindurch und sättigt sich mit dem Wasserdampf. Die Durchströmungsgeschwindigkeit des Reaktionsgases beträgt 150 I/Stunde und wird so gewählt, dass bei den gegebenen Testbedingungen nur etwa 20% des Sauerstoffangebots mit der Graphitmatrix der Kugel reagiert. Die Korrosionsgeschwindigkeit stellt den Graphitabbrand pro Stunde in Milligramm, bezogen auf einen 1 cm² der Kugeloberfläche, dar. Der bei 1000°C an den A 3-BE-Kugeln ermittelt Wert liegt im Bereich von 1 bis 1,25 mg/cm² pro Stunde. Mit 0,7 mg/cm² pro Stunde liegt der Vergleichswert für den nuklear reinen, bei 3000°C graphitierten ATJ Reaktorgraphit der Firma Union Carbone Corporation (UCC) deutlich niedriger.

Die Langzeit-Korrosionstests ergaben, dass bei den A 3-BE-Kugeln vorzugsweise der aus dem Phenolformaldehydharz gebildete Binderkoks mit dem Wasserdampf reagierte und folglich zum selektiven Abbrennen der Matrix führte. Im Gegensatz zu dem Naturgraphit und dem graphitierten Petrolkoks wurde bei dem Binderkoks eine wesentlich höhere chemische Affinität und folglich eine hohe Reaktionsgeschwindigkeit bei der Oxidation mit Wasserdampf beobachtet.

Um die selektive Oxidation des Binderkokses nachzuweisen, wurden die nach dem Korrosionstest oxidierten BE-Kugeln einem Abriebtest unterzogen. Zur Prüfung des Abriebes wurden die BE-Kugeln in einer rotierenden Lauftrommel mit 55 Umdrehungen/Minute bewegt. Eine abgerundete Schwelle von 2 mm Höhe an der Trommelinnenwand sorgte dafür, dass die BE-Kugeln dauernd in Bewegung blieben und nicht an der Trommelwand gleiteten. Löcher im Boden und Deckel der Trommel ermöglichten einen freien Austritt der abgeriebenen Graphitmatrix.

Die durch Reibung freigelegte Graphitmatrix wurde mit Röntgenfeinstrukturanalyse auf Kristallinität untersucht. Mit etwa 90 nm für die Kristallitgröße lag dieser Wert sehr hoch und ist nur den beiden Graphitkomponenten von Naturgraphit und graphitiertem Petrolkoks zuzuordnen. Der entsprechende Lc Wert des Binderkokes liegt um nahezu eine Größenordnung darunter und konnte nicht nachgewiesen werden. Das Nichtvorhandensein von Binderkoks in der abgeriebenen Graphitmatrix ist ein Beweis dafür, dass bei den Korrosionstests (Oxidation) ein selektives Abbrennen des Kokses erfolgte. Das selektive Abbrennen des Binderkokses ist somit die Hauptursache für die Festigkeitsabnahme der Graphitmatrix, verbunden mit dem Abschälen der Oberfläche der BE-Kugeln.

In bereits bekannten Verfahren zur Erhöhung der Korrosionsbeständigkeit von Formkörpern aus Graphit, wie sie in DE 41 27 693 A1, DE 27 18 143 und DE 12 69 559 beschrieben sind, werden die Formkörper nach ihrer Fertigstellung durch das Aufbringen von Schutzschichten, die SiC und/oder ZrC enthalten, im Hinblick auf die Korrosionsbeständigkeit verbessert. Eine solche nachträgliche Beschichtung betrifft die gepressten, aus A3-Graphit hergestellten Brennelementkugeln nicht und kann folglich den selektiven Abbrand des Binderkokses, der die Korrosion der kugelförmigen Brennelemente maßgeblich verursacht, nicht ausreichend reduzieren. Außerdem ist ein nachträglicher Verdichtungsvorgang arbeitsintensiv und kostspielig.

Es ist die Aufgabe der vorliegenden Erfindung, BE-Kugeln neu zu konzipieren und herzustellen, die den Forderungen der HT-Kugelhaufen-Kernreaktoren der Folge-Generationen genügen. Diese Aufgabe wird erfindungsgemäß durch die Gegenstände der Patentansprüche gelöst.

Insbesondere wird die Aufgabe dadurch gelöst, dass die brennstofffreie Schale der BE-Kugeln aus Siliziumcarbid (SiC) und/oder Zirkoncarbid (ZrC) sowie Naturgraphit und graphitiertem Petrolkoks besteht und eine mittlere nominelle Dicke von minimal 1 mm, bevorzugt von minimal 2 mm und am meisten bevorzugt von minimal 3 mm aufweist. Weiter bevorzugt liegt die mittlere nominelle Dicke in einem Bereich von 1 bis 5 mm, noch weiter bevorzugt in einem Bereich von 2 bis 5 mm, am meisten bevorzugt von 2 bis 4 mm, mit 3 mm als einer möglichen Ausführungsform.

Die Bestimmung der mittleren nominellen Dicke der brennstofffreien Schicht erfolgt mittels dem Fachmann bekannter Verfahren. Die angegebenen Werte schließen einen Toleranzbereich (bedingt durch Messgenauigkeit) von zu- 0,5 mm ein.

Der Siliziumcarbidgehalt in der brennstofffreien Schale ist im Bereich von 6 bis 14 Gew.-%, weiter bevorzugt 8 bis 12 Gew.-%,noch weiter bevorzugt von 9 bis 11 Gew.-% und am meisten bevorzugt 9 bis 10 Gew.-%, mit 10 Gew.-% als eine mögliche Ausführungsform.

Der Zirkoncarbidgehalt in der brennstofffreien Schale ist im Bereich von 10 bis 30 Gew.-%, weiter bevorzugt 15 bis 30 Gew.-%, noch weiter bevorzugt 19 bis 25 Gew.-% und am meisten bevorzugt 20 bis 23 Gew.-% mit 22,3 Gew.-% als eine mögliche Ausführungsform.

Der Hauptansatz der Erfindung beruht auf der Nutzung der hohen chemischen Affinität des Binderkokses. Dieser hat sich bei Korrosionstests bislang zwar als nachteilig erwiesen, jedoch kann erfindungsgemäß überraschend die hohe chemische Affinität des Binderkokses genutzt werden, indem bei der Presspulverherstellung für die Schale der BE-Kugeln eine Si- und/oder Zr-chemische Verbindung zugesetzt wird. Analog der Oxidation mit Wasserdampf reagiert die zugesetzte Si- und/oder Zr-Verbindung bei der Ausglühung der BE-Kugeln in Vakuum bei einer maximalen Temperatur von 2000°C mit dem Kohlenstoff des Binderkokses ebenfalls selektiv. Dabei wird weitgehend nur der für die Korrosion verantwortliche Binderkoksanteil der A 3-Graphitmatrix zum korrosionsbeständigen SiC oder ZrC überführt. Die beiden Carbide SiC und ZrC sind erprobte Reaktorwerkstoffe mit kubisch kristalliner Ordnung (Syngonie) und daher inhärent isotrop. SiC und ZrC zeichnen sich durch hohe Härte, hohe mechanische Festigkeiten und eine sehr gute Korrosionsbeständigkeit aus. Durch den Einsatz von SiC oder ZrC bei der Herstellung der A 3-Graphitmatrix werden die Eigenschaften der BE-Kugeln, wie beispielsweise Dichte, Bruchlast und insbesondere Korrosionsbeständigkeit, erheblich verbessert und die Anforderungen an die BE-Kugeln für Kugelhaufenreaktoren der Folge-Generationen erfüllt.

Als Folge der erhöhten Korrosions- und Festigkeitseigenschaften kann die Dicke der brennstofffreien Schale von BE-Kugeln verringert werden. Dadurch wird das Volumen des brennstoffhaltigen Kugelkerns relativ erhöht und dementsprechend die Brennstofftemperatur herabgesetzt. Eine niedrigere Brennstofftemperatur erhöht das Rückhaltevermögen der beschichteten Teilchen für Spaltprodukte erheblich.

Bei den erfindungsgemäßen kugelförmigen Brennelementen wird für die Fertigung der brennstofffreien Schale das gleiche Graphitpresspulver verwendet wie zur Herstellung des brennstoffhaltigen Kerns. Während der Fertigstellung der Brennelemente bildet sich aus dem Presspulver die Graphitmatrix, welche dann auch für Schale und Kern gleich ist. Die erfindungsgemäßen Brennelemente werden daher durch das Merkmal der ähnlichen oder identischen Zusammensetzung der Graphitmatrix von brennstoffhaltigem Kern und brennstofffreier Schale beschrieben. Dieses Merkmal ist im Besonderen zur Abgrenzung von anderen kugelförmigen Brennelementen wichtig, bei welchen diese Identität nicht gegeben ist. Solche Brennelemente weisen vorzugsweise eine Schale aus Elektrographit auf und sind u. a. in der Veröffentlichung: Fuel Development for THTR, G. Spencer, M. Hrovat and L. Rachor, Proceedings of the Conference "Fuel cycles oft he HTGR", Brussels, June, 1965, beschrieben.

Zum Begriff der Ähnlichkeit wird ausgeführt, dass zur Herstellung des brennstoffhaltigen Kerns und der brennstofffreien Schale das gleiche Graphitpresspulver, welches sich schließlich zu der besagten Graphitmatrix verbindet, verwendet wird. Die Verwendung des Begriffes "Ähnlichkeit" trägt der Tatsache Rechnung; dass zu dem Graphitpresspulver, das zum Vorpressen der brennstofffreien Schale verwendet wird, Si- und/oder Zr-chemische Verbindungen gegeben werden und zwar in den oben angegebenen Mengen.

Folgende Beispiele sollen die erfindungsgemäße Bereitstellung der BE-Kugeln und deren neue Konzeption näher erläutern, ohne die Erfindung dabei einzuschränken:

### Beispiel 1

### Einsatz von SiO₂

Die Herstellung des Graphitpresspulvers wurde in zwei voneinander getrennten Homogenisierungs-Chargen durchgeführt: Das Presspulver für den Kugelkern und das Presspulver für die Kugelschale. Zur Herstellung des Presspulvers für den Kugelkern wurde ein nuklear reines Naturgraphit mit einem bei 3000°C graphitierten Petrolkoks im Gewichtsverhältnis von 4:1 trocken vorgemischt. Bezogen auf die Graphitkomponenten wurden 20 Gew.-% des in Methanol gelösten Phenol-Formaldehyd-Binderharzes zugesetzt und bei Raumtemperatur in einem Knetmischer homogenisiert. Das Knetgut wurde bei 105°C im Vakuum (P < 50 hPa) getrocknet und anschließend mit einer Hammermühle mit Siebeinstellung von 1 mm gebrochen. Bei der Presspulverherstellung für die Kugelschale blieben bis auf die Anfertigung der SiO₂-Suspension alle übrigen Fertigungsschritte unverändert. Der Gehalt des SiO₂-Pulver betrug 83,4 Gew.-%, bezogen auf das Binderharz.

Die Ausgangskomponenten hatten folgende Eigenschaften:
- Naturgraphit mit der Bezeichnung FP der Firma Kropfmühl, Schüttdichte 0,4 g/cm³, Korndichte 2,26 g/cm³, BET-Oberfläche 2 m²/g, Kristallitgröße Lc = 100 nm, mittlerer Korndurchmesser 10 bis 20 µm, Aschegehalt 200 ppm und Bor-Äquivalent aus den Verunreinigungen der Asche < 1 ppm.
- Graphitierter Petrolkoks mit der Bezeichnung KRB < 0,1 mm der Firma Ringsdorff, Graphitierungstemperatur 3000°C, Schüttdichte 0,65 g/cm³, Korndichte 2,2 g/cm³, BET-Oberfläche 1,2 m²/g, Kristallitgröße Lc = 60 nm, mittlerer Korndurchmesser 30 bis 40 µm, Aschegehalt 10 ppm und Bor-Äquivalent aus den Verunreinigungen der Asche < 1 ppm.
- Phenolformaldehydharz vom Typ Novolak mit der Bezeichnung 4911 der Firma Bakelitte, Kondensationsmittel HCl, Molekulargewicht 690, Erweichungspunkt 101°C, pH-Wert = 6, Säurezahl = 7,5, freies Phenol 0,12 Gew.-%, Koksausbeute 50%, Löslichkeit in Methanol 99,97 Gew.-%, Aschegehalt 160 ppm und Bor-Äquivalent aus den Verunreinigungen der Asche 1 ppm. Zur Anhebung des Molekulargewichts wurde das Harz nach der Kondensation einer Wasserdampf-Destillation unterzogen.
- SiO₂-Pulver feingemahlenes handelsübliches SiO₂-Pulver mit einem mittleren Korndurchmesser von 1 bis 5 µm und einer Reinheit von 99,95%.

Mit einem Teil des für den Kugelkern hergestellten Graphitpresspulvers wurden die beschichteten Brennstoffteilchen (coated particles) von etwa 0,9 mm Durchmesser in einer Drehtrommel nach einem Dragierverfahren unter Zusatz von kleinen Mengen zerstäubten Harzlösungsmitteln umhüllt, bis die Teilchen eine etwa 0,2 mm dicke poröse Umhüllungsschicht aufwiesen.

Die beschichteten UO₂-Brennstoffteilchen hatten einen Kerndurchmesser von 0,5 mm und eine Dichte von 10,6 g/cm³. Die Brennstoffkerne wurden vierfach beschichtet, zunächst mit einer Pufferschicht aus Pyrokohlenstoff (Dicke 95 µm, Dichte 1,05 g/cm³), dann mit einer dichten Pyrokohlenstoffschicht (Dicke 40 µm, Dichte 1,90 g/cm³), anschließend mit einer dichten SiC-Schicht (Dicke 35 µm, Dichte 3,19 g/cm³) und abschließend mit einer dichten Pyrokohlenstoffschicht (Dicke 40 µm, Dichte 1,90 g/cm³). Die mit Presspulver umhüllten beschichteten Teilchen (overcoated coated particles) wurden getrocknet und im Gewichtsverhältnis 1:2,23 portionsweise mit weiterem Graphitpresspulver gemischt.

Eine Gemischportion von 164 g, die 29,3 g beschichtete Brennstoffteilchen enthielt, wurde in die erste Gummiform eingefüllt und diese in einem Stahlgesenk bei 5 MPa gepresst. In einer Gummiform mit ellipsoidförmigem Hohlraum von 205 cm³ und einem Achsenverhältnis von 1:1,17 entstand eine handhabbare Kugel mit einem Durchmesser von etwa 62 mm und einer Dichte von 1,2 g/cm³. Diese Kugel wurde in einer zweiten Gummiform in einer Schicht von losem Graphitpresspulver mit SiO₂-Zusatz eingebettet. Bei einem Achsenverhältnis von 1:1,14 betrug das Volumen des ellipsoidförmigen Hohlraums 295 cm³. Nach dem Pressen der Form bei 15 MPa entstand eine Kugel von etwa 68 mm Durchmesser, einem Gewicht von 240 g und einer Dichte von 1,45 g/cm³. Die nachgepresste Kugel wurde in eine dritte, genau passende Gummiform eingesetzt und in Vakuum (P < 120 hPa) bei hohem Druck von 300 MPa fertiggepresst. Unter dem Druck von 300 MPa betrug die Dichte der Graphitmatrix 1,94 g/cm³. Bei der gewählten Zusammensetzung des Graphitpresspulvers entspricht diese Dichte dem Wert von 99% der theoretischen Dichte. Nach der Druckentlastung verringerte sich die Dichte der Graphitmatrix von 1,94 g/cm³ auf 1,82 g/cm³. Zum Verkoken des Binders wurden die Kugelpresslinge innerhalb von 18 Stunden in einem Stickstoffstrom auf 800°C erhitzt und abschließend im Vakuum (P < 10⁻² hPa) bei 1900°C geglüht. Dabei reagierte erfindungsgemäß der aus dem Phenolformaldehydharz gebildete Binderkoks mit SiO₂ zur SiC.

### Beispiel 2

### Einsatz von ZrO₂

Ausgenommen vom Ersetzen des SiO₂-Pulver durch das ZrO₂-Pulver blieben alle Fertigungsschritte bei der Presspulverherstellung unverändert, so wie im Beispiel 1 beschrieben.

Der ZrO₂-Gehalt in der Methanolharzlösung betrug 167 Gew.-%, bezogen auf das Binderharz. Das eingesetzte ZrO₂-Pulver mit der Bezeichnung TZ der Firma Toyo Soda hatte einen mittleren Korndurchmesser von etwa 1 µm und eine Reinheit von 99,99%.

Nach Wärmebehandlung und Überdrehen der BE-Kugeln auf 60 mm Durchmesser wurden folgende Eigenschaften bestimmt:
- Geometrische Dichte der brennstofffreien Kugelschale
- Dicke der brennstofffreien Schale (diese wurde röntgenographisch ermittelt)
- Bruchlast, hierzu wurden die BE-Kugeln zwischen zwei Stahlplatten zerdrückt und die Bruchlast gemessen
- SiC- oder ZrC-Gehalt in der Kugelschale (die Bestimmung erfolgte durch chemische Analyse und Röntgenfeinstrukturanalyse) und
- Korrosionsbeständigkeit (hierzu wurden die BE-Kugeln dem Standard-Oxidationstest unterzogen).

Die Ergebnisse sind in der nachfolgenden Tabelle aufgelistet und mit den Werten der A 3-BE-Kugeln verglichen.

| **BE-Kugel/Eigenschaft** | **Mit SiC-Anteil in der Schale** | **Mit ZrC-Anteil in der Schale** | **A 3-BE-Kugeln** |
|---|---|---|---|
| Dichte der brennstofffreien Schale (g/cm³) | 1,78 | 1,91 | 1,72 |
| Dicke der brennstofffreien Schale (mm) | 3 ±0,5 | 3 ±0,5 | 5 ± 0,5 |
| Bruchlast parallel zur Pressrichtung | 29 | 31 | 24 |
| Bruchlast senkrecht zur Pressrichtung | 27 | 29 | 23 |
| SiC-Gehalt in der Schale (Gew.-%) | 10 | -- | -- |
| ZrC-Gehalt in der Schale (Gew.-%) | -- | 22,3 | -- |
| SiC-Volumenanteil in der Schale (Vol.-%) | 6,8 | -- | -- |
| ZrC-Volumenanteil in der Schale (Vol.-%) | -- | 8,6 | -- |
| Korrosiongeschwindigkeit bei 1000°C und 1 Vol.-% H₂O Dampf (mg/cm² pro Stunde) | 0,41 | 0,39 | 1,24 - 1,1 |

Aus der Tabelle geht hervor, dass Dichte und Bruchlast der BE-Kugeln durch den Einsatz von SiC oder ZrC deutlich verbessert werden. Besonders hervorzuheben ist die Verbesserung der Korrosionsbeständigkeit. Mit 0,41 bzw. 0,39 mg/cm²/Stunde liegt die Korrosionsgeschwindigkeit um nahezu Faktor 3 niedriger als der entsprechende Wert für A 3-BE-Kugeln und sogar um Faktor 1.7 günstiger als bei dem Reaktorgraphit ATJ der Firma UCC.

Der SiC-Gehalt in der BE-Kugelschale von 10 Gew.-% beträgt 5,32 g. Dieser Wert ist relativ klein und entspricht etwa dem Wert von 5,28 g der SiC-Beschichtung von 23.300 Brennelementteilchen einer Kugel. Die 23.300 Teilchen enthalten 14 g Uran (insgesamt). Wegen der relativ hohen Dichte von ZrC verglichen mit SiC unterscheiden sich die Volumenanteile der beiden Carbide in der Kugelschale unwesentlich voneinander.

## Patentansprüche

1. Ein kugelförmiges Brennelement für Hochtemperatur-Kugelhaufen-Kernreaktoren, bestehend aus einer A 3-Graphitmatrix, welches Brennstoff in Form von beschichteten Teilchen (coated particles) enthält, wobei die Brennstoffteilchen im Kugelkern homogen verteilt sind und in die A 3-Graphitmatrix eingebettet sind und der Kugelkern von einer brennstofffreien Schale umgeben ist, wobei die Schale mit dem Kern übergangslos verbunden ist und die Graphitmatrix des Kugelkerns und der Schale identisch oder ähnlich zusammengesetzt ist aus den Hauptkomponenten Naturgraphit, graphitiertem Petrolkoks sowie Binderkoks, **dadurch gekennzeichnet, dass** die brennstofffreie Schale der BE-Kugel aus Siliciumcarbid (SiC) und/oder Zirkoncarbid (ZrC) sowie aus Naturgraphit und graphitiertem Petrolkoks besteht und eine mittlere nominelle Dicke der Schale von ≥ 1 mm aufweist.

2. BE-Kugel nach Anspruch 1, **dadurch gekennzeichnet, dass** die mittlere nominelle Dicke der Schale ≥ 2 mm ist.

3. BE-Kugel nach Anspruch 1 und/oder 2, **dadurch gekennzeichnet, dass** die mittlere nominelle Dicke der Schale im Bereich von 1 mm bis 5 mm liegt.

4. BE-Kugel nach einem oder mehreren der vorhergehenden Ansprüche, **dadurch gekennzeichnet, dass** der Siliciumcarbidgehalt in der brennstofffreien Schale im Bereich von 6 bis 14 Gew.-% liegt.

5. BE-Kugel nach einem oder mehreren der vorhergehenden Ansprüche, **dadurch gekennzeichnet, dass** der Zirkoncarbidgehalt in der brennstofffreien Schale im Bereich von 10 bis 30 Gew.-% liegt.

6. Verfahren zur Herstellung von BE-Kugeln nach einem oder mehreren der vorhergehenden Ansprüche, **dadurch gekennzeichnet, dass** bei der Presspulverherstellung für die Schale die Silicium- oder Zirkonverbindungen als Oxide eingesetzt werden.

7. Verfahren nach Anspruch 6, wobei die Silicium- und/oder Zirkonoxide in der Methanol-Phenolformaldehyd-Harzlösung suspendiert werden und die Suspension mit den Graphitpulverkomponenten, bestehend aus Naturgraphit und graphitiertem Petrolkoks, durch Kneten bei Raumtemperatur homogenisiert werden.

8. Verfahren nach Anspruch 6 und/oder 7, wobei die Umsetzung zum Siliciumcarbid und/oder Zirkoncarbid bei der Ausglühung der BE-Kugeln im Vakuum (P < 10⁻² hPa) und einer maximalen Temperatur von 2000°C erfolgt.

## Claims

1. A spherical fuel element for high temperature pebble bed nuclear reactors, consisting of an A 3-graphite matrix, containing fuel in the form of coated particles, wherein the fuel particles are homogenously distributed in the core of the sphere and are embedded in the A 3-graphite matrix and wherein the core of the sphere is surrounded with a shell which is free of fuel, wherein the shell is seamlessly bonded with the core, and the graphite matrix of the core of the sphere and of the shell is identically or similarly composed of the main components natural graphite, graphitized petroleum coke as well as binder coke, **characterized in that** the shell of the fuel element sphere which is free of fuel consists of silicon carbide (SiC) and/or zirconium carbide (ZrC) as well as natural graphite and graphitized petroleum coke and has an average nominal thickness of the shell of ≥ 1 mm.

2. Fuel element sphere according to claim 1, **characterized in that** the average nominal thickness of the shell is ≥ 2 mm.

3. Fuel element sphere according to claim 1 and/or 2, **characterized in that** the average nominal thickness of the shell is in the range of 1 mm to 5 mm.

4. Fuel element sphere according to one or more of the preceding claims, **characterized in that** the content of silicon carbide in the shell which is free of fuel is in the range of 6 to 14 % by weight.

5. Fuel element sphere according to one or more of the preceding claims, **characterized in that** the content of zirconium carbide in the shell which is free of fuel is in the range of 10 to 30 % by weight.

6. Method for the production of fuel element spheres according to one or more of the preceding claims, **characterized in that** in the production of the molding powder for the shell the silicon or zirconium compounds are used as oxides.

7. Method according to claim 6, wherein the silicon and/or zirconium oxides are suspended in the methanol phenolformaldehyde resin solution and the suspension is homogenized with the graphite powder components consisting of natural graphite and graphitized petroleum coke by kneading at room temperature.

8. Method according to claim 6 and/or 7, wherein the reaction to silicon carbide and/or zirconium carbide is effected during the calcination of the fuel element spheres in vacuum (P < 10⁻² hPa) and at a maximum temperature of 2000°C.

## Revendications

1. Élément combustible de forme sphérique pour réacteur nucléaire à haute température, à lit de boulets, consistant en une matrice en graphite A3, qui contient le combustible sous forme de particules revêtues, dans lequel les particules de combustible sont distribuées de manière homogène dans le noyau et enrobées de la matrice en graphite A3, le noyau dudit élément étant enveloppé d'une coque dépourvue de combustible, ladite coque étant reliée au noyau sans transition, la matrice en graphite du noyau dudit élément et de ladite coque étant de composition identique ou similaire, composée principalement de graphite naturel, de coke de pétrole graphité ainsi que de coke de liant, **caractérisé en ce que** ladite coque dépourvue de combustible consiste en du carbure de silicium (SiC) et/ou du carbure de zirconium (ZrC), ainsi qu'en du graphite naturel et du coke de pétrole graphité, et présente une épaisseur nominale moyenne supérieure ou égale à 1 mm.

2. Élément combustible sphérique selon la revendication 1, **caractérisé en ce que** l'épaisseur nominale moyenne de la coque est ≥ à 2 mm.

3. Élément combustible sphérique selon la revendication 1 et/ou 2, **caractérisé en ce que** l'épaisseur nominale moyenne de la coque se situe dans l'intervalle allant de 1 mm à 5 mm.

4. Élément combustible sphérique selon l'une ou plusieurs des revendications précédentes, **caractérisé en ce que** la teneur en carbure de silicium dans la coque dépourvue de combustible se situe dans l'intervalle allant de 6 à 14% en poids.

5. Élément combustible sphérique selon l'une ou plusieurs des revendications précédentes, **caractérisé en ce que** la teneur en carbure de zirconium dans la coque dépourvue de combustible se situe dans l'intervalle allant de 10 à 30% en poids.

6. Procédé de préparation d'éléments combustibles sphériques selon l'une ou plusieurs des revendications précédentes, **caractérisé en ce que** pour la préparation de la poudre de compression pour la coque, les composés de silicium ou de zirconium sont mis en oeuvre sous forme d'oxydes.

7. Procédé selon la revendication 6, où les oxydes de silicium et/ou de zirconium sont mis en suspension dans la solution de résine méthanol-phénol-formaldéhyde et la suspension avec les composants de poudre de graphite, consistant en le graphite naturel et le coke de pétrole graphité, sont homogénéisés par malaxage à température ambiante.

8. Procédé selon la revendication 6 et/ou 7, où la réaction en carbure de silicium et/ou carbure de zirconium est réalisée par recuit des éléments combustibles sphériques sous vide (P < 10⁻² hPa) et à une température maximale de 2000°C.
